# EUROPEAN PATENT APPLICATION

(11) **EP 0 522 434 A1**
(43) Date of publication of application: **13.01.1993**
(21) Application number: 92111141.5
(22) Date of filing: 01.07.1992
(51) Int. Cl.: G05D 16/02, G05D 16/16, F16K 39/02, G05B 5/04

(54) **Pressure regulator for gas**

(30) Priority: 04.07.1991 IT VI910109
(71) Applicant: PIETRO FIORENTINI SPA, I-20124 Milano (MI) (IT)
(72) Inventor: Imboccioli, Claudio, I-36051 Creazzo (VI) (IT)
(74) Representative: Bonini, Ercole

(57) **Abstract**

According to the invention a gas pressure regulator is realized which comprises a regulator body (2) provided with a gas entrance way (3) and a gas exit way (5) and having also a regulation unit (10) applied to the body (2), a lamination cock (17), a pilot unit (200); the regulator is characterized in that the upper chamber (13) of the control head (11) of the regulator unit presents innerly at least one wall (14) which divides it into two parts communicating with each other by means of an opening, and at least one duct (46,40) which connects the lower chamber of the (14) of the control head with the exit way (5) of the regulator body (2) where, in correspondence of said duct, at least one lamination device for delaying the gas flux is present.

## Description

The invention concerns the realization of a so called "fail-to-open" controlled pressure regulator for gases, particularly suited to be used in industrial plants for the transport and distribution of natural gas.

It is known that in said plants pressure regulators are employed for reducing the pressure to the value needed by the user, maintaining it steadily at the value fixed in advance, even in case of upstream pressure variations or capacity variations at the user end.

Moreover in these plants, for continuity reasons in the safety of gas delivery, the so -called fail-to-open are needed which open or tend to open in case of failure and/or lack of power in the pilot circuit needed.

On the market there are various types of regulators of the above mentioned type, manufactured according to operation principles more or less equivalent to each other and having different dimensions according to the capacity and pressure of the gas to be treated.

All pressure regulators present however some disadvantages, so that their operation is not always satisfactory in all operation conditions.

One of these disadvantages, for example, is that said pressure regulators operate unstably if perturbation causes of relatively minor importance are present. In other words, the operation of said regulators is unstable when upstream pressure variations or capacity variations at the user end are present having a relatively small importance.

Another disadvantage of the regulators of the known type above mentioned is that, when important perturbation causes occur, they vice versa present rather long transients.

Another disadvantage is poor regulation precision connected with a high hysteresis, particularly in the low pressure regulators.

In order to avoid or reduce such disadvantages the present invention realizes a pressure regulator, the main goal of which is to reach a very stable operation when perturbation causes of relatively small importance like the upstream pressure variation or the capacity variation at the user end are present.

A further goal of the invention is to realize a regulator which reduces at a minimum the transients when perturbation causes of considerable importance occur.

Another goal of the invention is to obtain also for a low pressure fail-to-open regulator a precision and a hysteresis comparable to those normally obtainable with high pressure regulators.

The above mentioned goals are reached by the realization of a gas pressure regulator which, according to the main claim, comprises:
- a regulator body provided with an entrance way connected to the high pressure gas feeding pipe and an exit way connected to the low pressure gas exiting pipe toward the user, said ways being connected with each other through an opening made in the regulator body and engaging with a shutter;
- a regulation unit applied to the regulator body and comprising a stem which supports the above mentioned shutter at one hand, while the opposite end is fixed to a control membrane, placed inside a control head in which it forms an upper chamber and a lower chamber;
- a lamination cock, fed through a pipe comunicating with the entrance way of the regulator body and connected at the exit with the upper chamber of the control head;
- a pilot unit, fed through a pipe connected with both the exit of the lamination cock and the upper chamber of the control head, and communicating with the exit pipe of the regulator by means of other pipes,
and is characterized in that the upper chamber of the control head presents inside at least one wall which divides it into a lower part and an upper part communicating with each other by means of an opening, combined with at least a duct which connects the lower chamber of the control head itself with the exit way of the regulator body where, in correspondence of the opening of said wall and in correspondence of said duct, there is at least one lamination device for the delayed gas influx.

To the regulator body a safety device can be applied, consisting either of a blocking valve or of a regulator as monitor device.

Further, to the regulator body a sound reducing device can also be applied, consisting of a tubular case having sound absorbing walls and which is interposed between the regulator body and the control head.

Advantageously by means of the pressure regulator of the invention a stable control of the downstream pressure is realized, because the regulator presents a very precise operation.

Also advantageously, the pumping phenomena are eliminated, which reduce the response time in case of external perurbation causes like pressure variations at the entrance and variations of the needed capacity.

Also advantageously the regulator of the invention, as will be better explained hereafter, opens or tends to open both when for various causes there is lack of feeding in the upper chamber of the control head, and when the control membrane breaks, as well as in case of pilot failure, for example if one or more of its membranes break. Furthermore, the regulator of the invention is of easy troubleshooting; particularly the rubber parts, the membranes for example, which are the parts more subject to wear and replacement, during the planned maintenance can be replaced on site without the need of disconnecting the regulator body from the gas entrance and exit pipes.

The above mentioned purposes and advantages will be better understood from the description of a preferred form of execution of the invention, which is only given by way of illustration, but is not meant to limit the scope of the invention, such as it is illustrated in the alleged tables of drawings, wherein:
- fig. 1 shows a part section schematic view of the reducer-regulator of the invention, in closed position;
- fig. 2 shows a longitudinal view part section of the pilot unit of the regulator itself when it is in closed position;
- fig.3 shows an enlarged view of an internal detail of the pilot unit in fig. 2, in closed position;
- fig. 4 shows the pilot unit of fig. 2 in an open position in regulating phase;
- fig. 5 shows the regulator of fig. 1 in the position it assumes during the operation, in regulating phase.

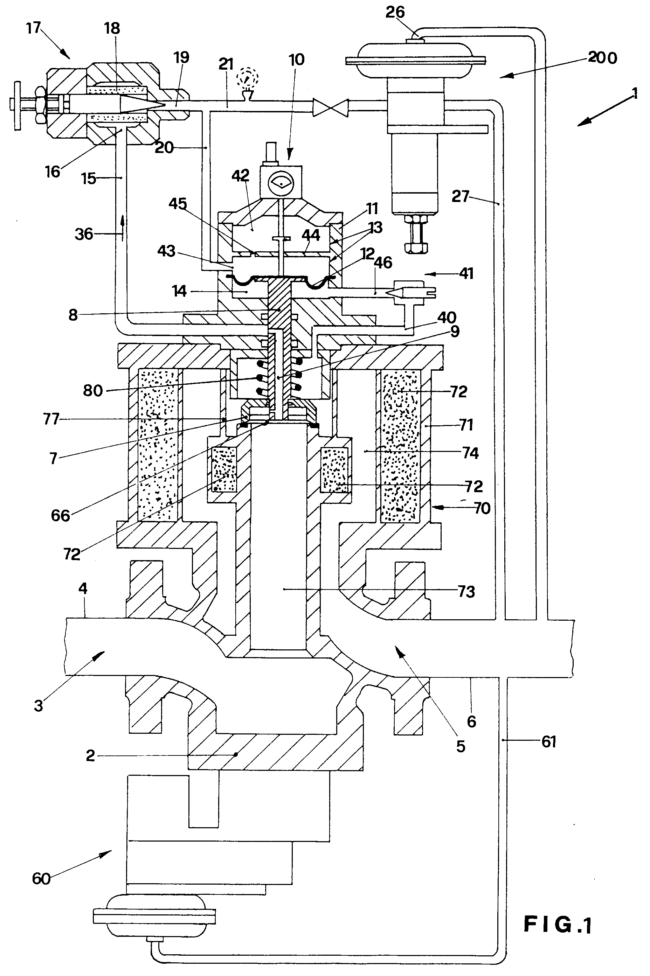

As can be seen in fig. 1, the pressure regulator, indicated as a whole with 1, consists of a body 2 provided with an entrance way 3 connected to the high pressure entrance pipe 4 of the gas, and an exit way 5, connected to the low pressure exit pipe 6 toward the user. Said entrance and exit ways communicate with each other through an opening 66 made in the body 2 and interceptable by a shutter 7. Said shutter 7 is vertically movable by means of a stem 8 to which the shutter itself is applied. It belongs to the regulation unit 10 placed in the upper part of the body 2, to which it is applied by the interposition of a sound reducing device indicated as a whole with 70.

Said sound reducing device 70 consists essentially of a tubular case 71, inside which sound absorbing material 72 is placed and which delimits a cylindrical chamber 73, which connects the entrance way 3 of the regulator with the upstream zone of the shutter 7, and an annular chamber 74, which connects the downstream zone of the shutter 7 with the exit way 5 and consequently with the exit pipe 6.

With regard to the regulation unit 10, in addition to the above mentioned stem 8, it comprises also a control head 11, to the walls of which the rim of a control membrane 12 is fixed, the same membrane being fixed to the stem 8 at the opposite side of the shutter 7 and dividing said control head 11 into an upper chamber 13 and a lower chamber 14.

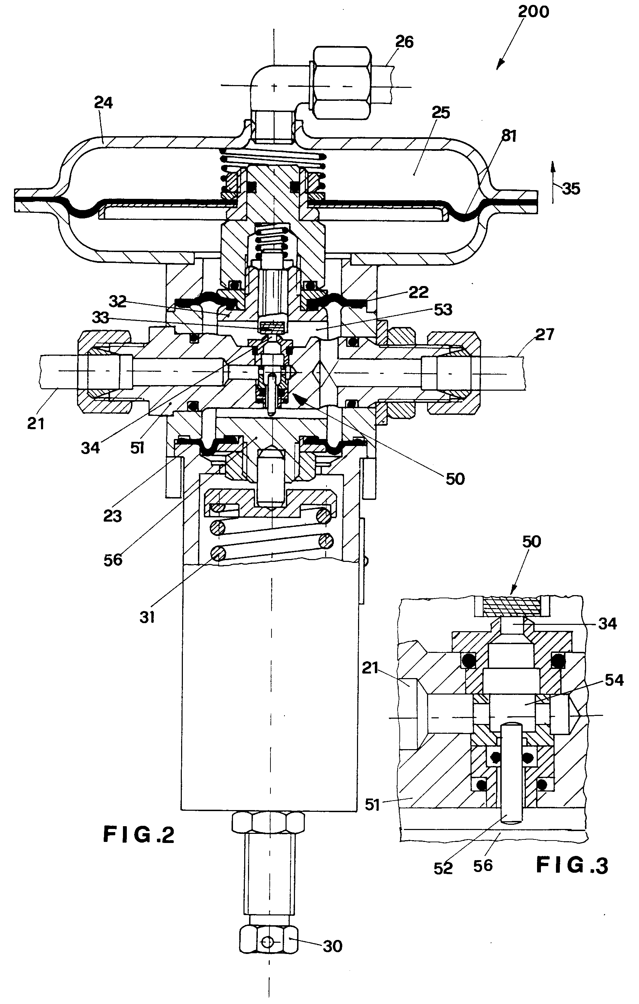

It can also be noted in fig. 1 that the stem 8 presents an inner channel 9 which puts in communication the entrance way 3 of the regulator body with a pipe 15 connected with the entrance way 16 of a lamination cock, indicated as a whole with 17. Within that cock there is a filter 18, and its exit 19 communicates through another pipe 20 with the upper chamber 13 of the control head 11 of the above mentioned regulation unit 10. Moreover, through another pipe 21, the exit 19 of said lamination cock 17 feeds the pilot unit too, indicated as a whole with 200 and visible more in detail in a part section in fig. 2, which, as can be observed, is innerly equipped with three membranes. The pilot unit 200 presents in the upper part a membrane 81 which is sensitive to the regulated pressure, in the middle part an intermediate membrane 22 and in the lower part a lower membrane 23. It can also be observed that the membrane 81, sensitive to the regulated pressure, is contained inside a case 24, the volume 25 of which above the membrane 21 comunicates, through the pipe 26, with the pipe 6; moreover, the zone comprised between the intermediate membrane 22 and the lower membrane 23 is connected to the same pipe 6 for the gas exiting to the user by means of another pipe 27.

The regulator operation is described hereafter.

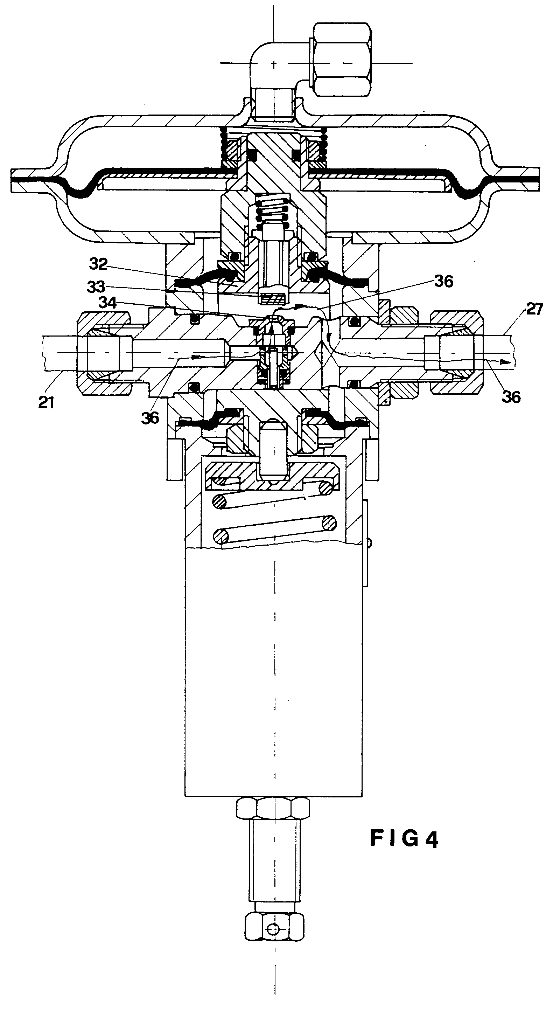

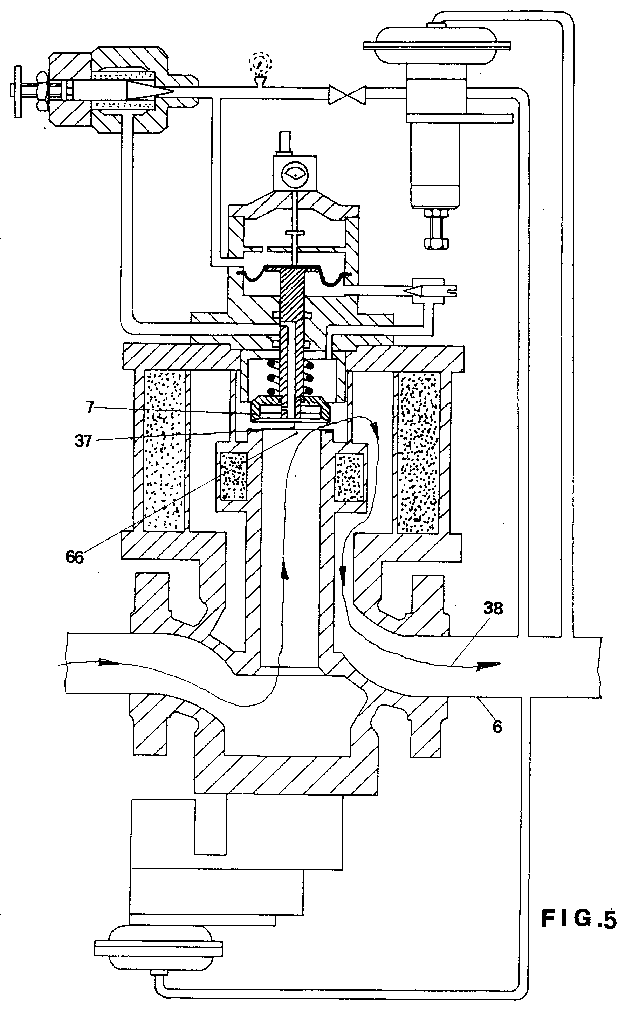

The gas utilization pressure value, and thus the pressure value at the exit pipe 6, is set by the user by suitably calibrating the preloading value of the spring 31 through the screw 30. Since the pressure existing in the exit pipe 6 is transmitted to the membrane 81 by the gas which, through the pipe 26, fills the volume 25 of the case 24 in which the membrane is contained, by adjusting the preloading of the spring 31 the force value is adjusted which balances the force which generates the pressure existing in the exit pipe 6 acting on the sensitive membrane 81. When the pressure at the exit pipe 6 is just above the set calibration value of the spring 31, the interception unit 32 inside the pilot unit 200, being pushed (thrusted) by the spring 31, disposes in such a way that the shutter 33 to which it is connected closes the orifice 34 of the pipe coupling 51 connected to the feeding pipe 21 coming from the lamination cock 17. In such a case there is not gas flux from the pipe 21. In such conditions, through the inner channel 9 of the stem 8, the pipe 15, the lamination cock 17 and the pipe 20, the gas is adducted from the feeding pipe 4 on the membrane 12 of the regulation unit 10, on which thus the same pressure acts as that which acts under the shutter 7. The action of the spring 80 and the size of the pushing surfaces are such that the shutter 7 remains closed. When the pressure drops in correspondence of the exit pipe 6, due for example to an increased capacity needed by the user, the pressure drop is detected by the sensitive membrane 81, which moves up vertically in the direction indicated by the arrow 35 showed in fig. 2 because the force of the spring 31 is bigger than that generated by the pressure acting on the sensitive membrane 81. In this case, the interception unit 32 moves vertically upward in the direction 35 and assumes the configuration represented in fig. 4, in which it can be observed that the shutter 33 frees the orifice 34. Consequently, in the pipe 21 a gas flux 36 is established coming from the entrance pipe 4. Then inside the upper chamber 13 and above the membrane 12 a pressure is established lower than that acting on the lower surface of the shutter 7 and, consequently, the shutter 7 moves up vertically assuming the configuration shown in fig. 5. Through the port 37 which is created between the shutter 7 and the opening 66, the gas flows in the direction 38 and restores in the exit pipe 6 the previous pressure conditions changed by the increased capacity needed by the user (see fig. 5). When the pressure conditions in the exit pipe 6 are restored to the value corresponding to the set value of the spring 31, the pilot unit 200 assumes a stable position and remains in this position until a new perturbation causes a new intervention.

In order for the regulator to maintain a stable operation even in case of disturbance causes of relatively small importance, and to reduce the transient to a minimum in case of very important perturbation causes, the lower chamber 14 of the regulation unit 10 is connected to the exit way 5 of the regulator body 2 through ducts 40 and 46, between which a lamination device is interposed, in this case a lamination valve 41. Moreover, the upper chamber 13 of the regulation unit 10 is divided into an upper zone 42 and a lower zone 43 through the interposition of a dividing wall 44 having an opening for the communication between the two chambers, for example a calibrated hole 45 which makes the two zones to communicate.

In this case of pressure decreasing at the exit pipe 6, the pilot unit 200 and the lamination cock 17 act as previously described by activating a gas flux in the direction 36 in the pipe 15, so as to create a gas flux in the direction 38 from the entrance pipe 4 to the exit pipe 6. The calibrated hole 45 and the lamination valve 41 act as delaying elements for the gas deflux inside the regulation unit 10. In fact, when the pressure in the exit pipe 6 decreases, the lamination valve 41 delays the gas flux which tends to flow from the pipe 46, communicating with the lower chamber 14 at a higher pressure, toward the pipe 40, which communicates with the exit way 5 at a lower pressure by means of the annular chamber 74. In a similar way, the calibrated hole 45 delays the gas flux which tends to flow from the upper zone 42 of the upper chamber 13 toward the lower zone 43, because said lower zone communicates, through the pipe 20 and the pipe 21, with the lamination cock 17 which reduces the pressure. Said devices delay the gas efflux and create a damping which annulls the effects of relatively small perturbation causes. On the other hand, if relatively important perturbation causes are present, they reduce the transient time to a minimum.

During the regulator operation, the gas flux which flows through the port 37, as can be seen in fig. 5, presents a remarcable noise, which is reduced by the sound reducing device 70. In fact, the gas flowing toward the exit pipe 6 passes first through a grid 77 where its noise is changed in frequency by shifting it to values not audible by the human ear, and then passes through the annular chamber 74 where the noise is further reduced by the sound absorbing material 72.

It is interesting to observe that the pilot unit 200 presents in the central part a balancing device, indicated as a whole with 50, visible in an enlarged view in fig. 3. It is important to note that when the pilot unit 200 is in closed position, inside the chamber 54 belonging to the pipe coupling 51 to which the pipes 21 and 27 are connected, there is the pressure existing in the pipe 21, which corresponds to the pressure existing upstream the regulator, i.e. to the pressure existing in the entrance pipe 4. In fig. 3 it can be observed that in such a situation the interception unit 32 is subject to an unbalanced thrust. In the annular zone 53, in fact, which communicates with the exit pipe 6 through the pipe 27, the use pressure exists, while in correspondence of the orifice 34, which is closed by the shutter 33, acts the pressure existing inside the pipe 21 which, as said before, corresponds to the pressure of the entrance pipe 4. Thus the interception unit 32 is subjected to an unbalanced thrust, which is re-balanced by placing a passing-through cylindrical pin 52 which transmits the same thrust acting on the shutter 33 to the lower surface 56 of the interception unit 32. The interception unit 32 is thus balanced and moves upward or downward only depending on the thrust of the spring 31. The pilot unit 200 then opens or closes only depending on the downstream pressure, so the system is balanced and guarantees an optimal regulation precision.

In the lower part of the regulator body 2 also a safety device is applied, indicated as a whole with 60, which, by means of the pipe 61 which connects it to the exit pipe 6, detects the increases of pressure above the safety threshold. In this case, if the safety device is a blocking valve type device, it stops completely the gas flux to the user end or, if it is a monitor type device, assures the gas feed to the user end by replacing the operation of the regulator itself and thus assures the continuity of the flux.

It can been understood that the regulator of the invention reaches all the desired goals.

In fact, it has been seen in the description that the realization of a connection between the lower chamber of the regulation unit and the exit way of the regulator through the interposition of a lamination valve, in combination with the subdivision of the upper chamber of the regulation unit by means of a wall having a calibrated hole, increases the regulator operation stability in case of relatively small perturbation causes and reduces the transition time if very important perturbations occur. It has been seen also that the introduction of the pilot unit in the pressure balancing device contributes to the operation precision of the regulator itself.

From the description, moreover, it can be understood that any stoppage in the pipes, in the ducts or in the devices, which stops the feed of the upper chamber 13 of the control head 11, makes the regulator open, or tend to open.

The regulator opens also if the control membrane 12 breaks, or if the pilot 200 or one or more of its membranes get damaged.

The special construction of the regulator, moreover, allows the replacement of the external elements, for example the membranes, during the planned maintenance operations, which can be made on site without disconnecting the regulator body from the pipes.

It is understood that some constructives variations and modifications made in order to improve the operation of the regulator or to realize a cheaper operation, do not exceed the scope of the present invention.

## Claims

1. A gas pressure regulator comprising:
- a regulator body (2) having an entrance way (3) connected to the feeding pipe (4) of the high pressure gas and an exit way (5) connected to the exit pipe (6) of the low pressure gas at the user end, where said ways communicate with each other through at least one opening (66) made on the regulator body (2) and cooperating with a shutter (7);
- a regulation unit (10) applied to the regulator body (2) and comprising a stem (8) which supports said shutter (7) at one end, while the other end is fixed to a control membrane (12) fixed inside a control head (11) where it forms an upper chamber (12) and a lower chamber (14);
- a lamination cock (17) or a similar device, fed through a pipe (15) communicating with the entrance way (3) of the regulator body (2) and connected at the exit with the upper chamber (13) of the control head (11);
- a pilot unit (200) fed through a pipe (21) connected both with the exit (19) of the lamination cock (17) and with the upper chamber (13) of the control head (10), and communicating with the regulator exit pipe (6) by means of more pipes (26,27),
characterized in that the upper chamber (13) of the control head (11) of the regulation unit (10) presents inside at least one wall (14) which divides it into a lower part (43) and an upper part (42) communicating with each other through an opening, combined with at least one duct (46,40) which connects the lower chamber (14) of the control head (11) with the exit way (5) of the regulator body (2) where, in correspondence with the opening of said wall (44) and in correspondence with said duct (46,40) at least one lamination device (45,41) is present for delaying the gas flux.

2. A pressure regulator according to claim 1), characterized in that the lamination device applied to the opening of the wall (44) is a calibrated hole (45).

3. A pressure regulator according to claim 1), characterized in that the lamination device applied to the duct (46, 40) for connecting the lower chamber (14) with the exit way (5) to the regulator body (2) is an adjustable lamination valve (41).

4. A pressure regulator according to claim 1), characterized in that a safety device (60) is applied to the regulator body (2).

5. A pressure regulator according to claim 4), characterized in that the safety device (60) is of the blocking valve type.

6. A pressure regulator according to claim 4), characterized in that the safety device (60) is a regulator operating as a monitor.

7. A pressure regulator according to claim 1), characterized in that a sound reducing device (70) is applied to the regulator body (2), said device being located between the body (2) and the regulation unit (10).

8. A pressure regulator according to claim 1), characterized in that the pilot unit (200) presents a balancing device (50) consisting of a pin (52) passing through transversally in a pipe coupling (51) of the pilot unit (200) at one side of which the pipe (21) coming from the lamination cock (17) is connected, and at the opposite side the pipe (27) comunicating with the exit (6) of the regulator is connected, said pin (52) being placed at the opposite side of the orifice (34) made on the pipe coupling (51) and closed by the shutter (33).
